# EUROPÄISCHE PATENTANMELDUNG

(11) **EP 4 586 365 A1**
(43) Veröffentlichungstag der Anmeldung: **16.07.2025**
(21) Anmeldenummer: 25150987.3
(22) Anmeldetag: 09.01.2025
(51) Int. Cl.: H01M 10/54, H01M 50/516, H01M 50/547

(54) **TRENNVERFAHREN ZUM LÖSEN EINER STOFFSCHLÜSSIGEN VERBINDUNG IN EINEM BATTERIEPACK**

(30) Priorität: 12.01.2024 DE 102024200288
(71) Anmelder: Robert Bosch GmbH, 70442 Stuttgart (DE)
(72) Erfinder: Mehlo, Dennis, 72766 Reutlingen (DE)

(57) **Zusammenfassung**

Die vorliegende Erfindung betrifft ein Trennverfahren zum Lösen einer stoffschlüssigen Verbindung zwischen einem Zellverbinder und einem Kontaktbereich einer Batteriezelle, so dass die Batteriezelle ohne weiterer Nacharbeitungsschritte erneut stoffschlüssig verbindbar ist, wobei auf die stoffschlüssige Verbindung eine Scherbelastung und/oder eine Schälbelastung und/oder eine Torsionsbelastung wirkt.

## Beschreibung

### Stand der Technik

Die vorliegende Erfindung beschreibt ein Trennverfahren zum Lösen einer stoffschlüssigen Verbindung zwischen einem Zellverbinder und einem Kontaktbereich einer Batteriezelle und ein Batteriepack mit einer stoffschlüssigen Verbindung, welche eingerichtet ist, durch das erfindungsgemäße Verfahren getrennt zu werden.

Zellverbinder werden stoffschlüssig, meist mittels Schweißverfahren an Batteriezellen kontaktiert. Im Falle einer Nachbearbeitung oder einer Reparatur müssen Batteriezellen (eine oder mehrere oder alle Zellen eines Batteriepacks) elektrisch getrennt werden. Die stoffschlüssige Verbindung, welche die elektrische Kontaktierung darstellt, muss daher getrennt werden. Sollte ein Tausch der defekten oder einer auserwählten Zelle vorgenommen werden, müssen die vorab gelösten anderen noch funktionalen und als gut quantifizierten Zellen erneut stoffschlüssig kontaktiert werden. Beim typischen Lösen der Zellen wird aufgrund der hohen Stabilität der stoffschlüssigen Verbindung meist die Zelle undefiniert geschädigt. So kann es vorkommen, dass die Oberflächentextur zerstört wird oder sogar der Zelldeckel beschädigt wird. Ein wiederverwenden dieser Zelle ist technisch nicht möglich.

Offenbarung der Erfindung.

Das erfindungsgemäße Trennverfahren mit den Merkmalen des Anspruchs 1 sowie das Batteriepack mit den Merkmalen des Anspruchs 8 ermöglicht das saubere und sichere Lösen einer Batteriezelle von einer stoffschlüssigen Verbindung in einem Batteriepack. Indem die Batteriezelle erneut mit dem Zellverbinder stoffschlüssig verbunden werden kann, wird die Wiederverwendung der gelösten Batteriezelle ermöglicht.

Die Erfindung gemäß Anspruch 1 betrifft ein Trennverfahren zum Lösen einer stoffschlüssigen Verbindung zwischen einem Zellverbinder und einem Kontaktbereich einer Batteriezelle, sodass die Batteriezelle ohne weitere Nachbearbeitungsschritte erneut stoffschlüssig verbindbar ist. Dabei wird die stoffschlüssige Verbindung durch eine Schälbelastung und/oder eine Scherbelastung und/oder eine Torsionsbelastung belastet. Der Zellverbinder ist vorzugsweise ein metallisches Bauteil welches eingerichtet ist, mehrere Batteriezellen miteinander zu verbinden. Des Weiteren kann der Zellverbinder die Verbindung der Batteriezellen mit weiteren elektrischen Bauteilen ermöglichen. Stoffschlüssige Verbindungen weisen eine geringe Widerstandskraft gegenüber Schälbelastungen, Scherbelastungen und Torsionsbelastungen auf, sodass sich die Verbindung bei einer geringen Belastung löst, welche zu keiner Beschädigung der Batteriezelle führt.

Die Unteransprüche zeigen bevorzugte Weiterbildungen der Erfindung.

Vorzugsweise wird bei dem Trennverfahren eine Lasche des Zellverbinders vom Kontaktbereich aus weggebogen. Die Lasche wird insbesondere senkrecht vom Kontaktbereich aus weggebogen. Das Wegbiegen der Lasche ermöglicht eine bessere Zugänglichkeit der stoffschlüssigen Verbindung.

Weiter bevorzugt wird eine Zugkraft auf die Lasche ausgeübt, um eine Schälbelastung an einem Randbereich der stoffschlüssigen Verbindung zu erzeugen, sodass ein Riss in der stoffschlüssigen Verbindung entsteht. Aufgrund der Schälbelastung erfährt die stoffschlüssige Verbindung eine hohe Kerbspannung in einem Randbereich. Durch diese lokale Spitzenlast und den sehr geringen tragenden Querschnitt am Randbereich fängt die stoffschlüssige Verbindung an sich zu lösen und bildet einen Riss. Mit zunehmender Rissbildung nimmt der tragende Querschnitt der Verbindung zu. Ist der tragende Querschnitt groß genug, um die Zugkraft zu tragen, wird der Zellverbinder und oder der Kontaktbereich der Batteriezelle geschädigt. Daher ist es notwendig, nach der ersten Rissbildung mittels der Zugkraft die stoffschlüssige Verbindung nicht weiter zu belasten. Es reicht hierbei, die stoffschlüssige Verbindungsstelle anzureißen und einen kleinen Riss im Randbereich zu generieren.

Alternativ oder zusätzlich kann mithilfe einer Schneide der Riss erzeugt werden.

Die Zugkraft ist vorzugsweise im Wesentlichen senkrecht zum Kontaktbereich ausgerichtet. Dies maximiert eine Kerbspannung welche auf den Randbereich wirkt.

Weiter bevorzugt wird nach der Rissentstehung eine Torsionsbelastung auf die stoffschlüssige Verbindung aufgebracht, sodass sich der Riss im Wesentlichen parallel zum Kontaktbereich ausbreitet. Die Torsionsbelastung kann vom Zellverbinder und/oder von der Batteriezelle aus auf stoffschlüssige Verbindung aufgebracht werden. Die Torsionsbelastung wirkt an der stoffschlüssigen Verbindungsstelle aufgrund des Kerbfaktors durch den bestehenden Riss erhöht. Die Torsionsbelastung führt dazu, dass der Riss sich weiter parallel zum Kontaktbereich ausweitet und so zur Gesamttrennung der stoffschlüssigen Verbindung führt. Aufgrund von Fertigungstoleranzen oder variierender Materialeigenschaften, wie beispielsweise der Gitterstruktur, kann die Ausweitung des Risses von einer perfekten Parallelität zum Kontaktbereich abweichen.

Gemäß einer weiteren bevorzugten Ausgestaltung der Erfindung, weist das Trennverfahren einen Scherschneideschritt auf. Dabei wird eine erste Schneide und eine zweite Schneide zwischen dem Kontaktbereich und dem Zellverbinder auf beiden Seiten der stoffschlüssigen Verbindung angeordnet. Die erste und zweite Schneide üben eine Scherbelastung im Bereich der stoffschlüssigen Verbindung auf den Zellverbinder aus, um den Zellverbinder von der Batteriezelle zu trennen. Dabei findet die Abtrennung der stoffschlüssigen Verbindung leicht erhöht über dem Kontaktbereich statt. Hierdurch erhält die Batteriezelle keinerlei Beschädigungen. Ein überbleibender Teil des Zellverbinders auf der Batteriezelle ist vorzugsweise so klein, dass eine erneute stoffschlüssige Verbindung der Batteriezelle mit einem Zellverbinder ohne Nachbearbeitung möglich ist.

Vorzugsweise trennen die erste Schneide und die zweite Schneide den Zellverbinder weniger als 1 mm, insbesondere 0,5 mm, oberhalb des Kontaktbereichs von der Batteriezelle. Hierdurch kann sichergestellt werden, dass ein überbleibender Teil des Zellverbinders auf der Batteriezelle klein genug ist, um eine erneute stoffschlüssige Verbindung der Batteriezelle mit einem Zellverbinder ohne Nachbearbeitung zu ermöglichen.

Des Weiteren beschreibt die Erfindung ein Batteriepack, welches eine Batteriezelle und einen Zellverbinder umfasst. Dabei ist die Batteriezelle mit dem Zellverbinder durch eine stoffschlüssige Verbindung an einem Kontaktbereich der Batteriezelle verbunden. Des Weiteren ist die stoffschlüssige Verbindung eingerichtet, durch ein Verfahren nach dem zuvor beschriebenen Verfahren getrennt zu werden.

Vorzugsweise weist der Zellverbinder eine Kontaktebene und eine Verbindungsebene auf. Die Kontaktebene ist durch die stoffschlüssige Verbindung mit der Batteriezelle verbunden. Die Verbindungsebene ist von der Batteriezelle beabstandet, parallel zur Kontaktebene angeordnet. Somit ist die stoffschlüssige Verbindung gut unterhalb der Verbindungsebene zugänglich.

Weiter bevorzugt weist der Zellverbinder eine Lasche auf, die angrenzend an die stoffschlüssige Verbindung angeordnet ist. Die Lasche erleichtert das Aufbringen einer Zugkraft, welche in einer Schälbelastung auf die stoffschlüssige Verbindung resultiert. Über die Lasche kann ebenfalls eine Torsionsbelastung auf die stoffschlüssige Verbindung aufgebracht werden.

### Kurze Beschreibung der Zeichnungen

Nachfolgend werden zwei Ausführungsbeispiele der Erfindung unter Bezugnahme auf die begleitenden Zeichnungen im Detail beschrieben. In der Zeichnung ist:
- Figur 1: eine schematische Ansicht von Schritten eines Trennverfahrens nach einem ersten Ausführungsbeispiel, und
- Figur 2: eine schematische Ansicht eines Trennverfahrens nach einem zweiten Ausführungsbeispiel.

### Ausführungsformen der Erfindung

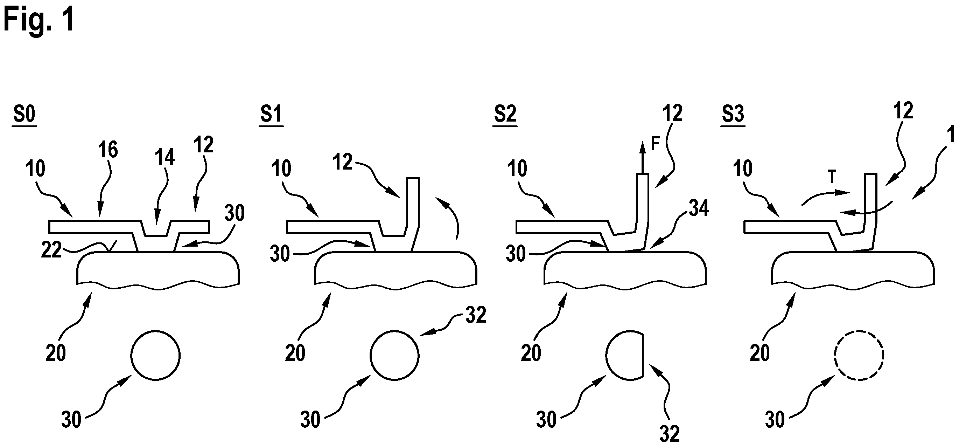

Nachfolgend wird unter Bezugnahme auf die Figur 1 ein erstes bevorzugtes Ausführungsbeispiel der Erfindung im Detail beschrieben.

Figur 1 zeigt vier Ansichten unterschiedlicher Schritte eines Trennverfahrens zum Lösen einer stoffschlüssigen Verbindung 30 zwischen einer Batteriezelle 20 und einem Zellverbinder 10 in einem Batteriepack 1. Zu jeder der vier Ansichten ist ein zugehöriger Querschnitt, parallel zum Kontaktbereich 22, durch die stoffschlüssige Verbindung 30 abgebildet.

Die erste Ansicht zeigen den Zellverbinder 10 und die Batterie 20 in einem Ausgangszustand S0. Die Batterie 20 ist als Rundzelle dargestellt welche typischerweise eine Spannung von 3,6 V liefert. Der Zellverbinder 10 weist eine Verbindungsebene 16 und eine Kontaktebene 14 auf. Komplanar zur Verbindungsebene 16 ist eine Lasche an die Kontaktebene 14 angrenzend angeordnet.

Die Kontaktebene 14 ist über die stoffschlüssige Verbindung 30 mit einem Kontaktbereich 22 der Batteriezelle 20 verbunden. Dabei ist die Kontaktebene 14 parallel zum Kontaktbereich 22 angeordnet.

Vom Kontaktbereich 22 der Batteriezelle 20 ist die Verbindungsebene 16 beabstandet angeordnet. Somit entsteht einen Raum zwischen der Verbindungsebene 16 und dem Kontaktbereich 22.

Der Querschnitt der stoffschlüssigen Verbindung 30 ist im Ausgangszustand so kreisförmig. Alternativ kann die stoffschlüssige Verbindung 30 auch andere Querschnittsformen aufweisen. Je kleiner die stoffschlüssige Verbindung 30 ausgeführt ist, desto schneller und einfacher kann der Zellverbinder 10 von der Batteriezelle 20 getrennt werden und desto weniger Strom kann durch die stoffschlüssige Verbindung 30 fließen.

Die stoffschlüssige Verbindung 30 ist vorzugsweise geschweißt oder verlötet. Insbesondere ist der Zellverbinder 10 mit dem Kontaktbereich 22 der Batteriezelle 20 durch Widerstandsschweißen verbunden.

Die zweite Ansicht zeigt den Zellverbinder 10 und die Batterie 20 nach einem ersten Schritt S1. In dem ersten Schritt S1 des ersten Ausführungsbeispiels wird die Lasche 12 um 90° nach oben gebogen, sodass die Lasche 12 senkrecht zum Kontaktbereich 22 ausgerichtet ist.

Die Lasche 12 kann als eigenständiges Bauteil das Zellverbinders 10 vorgesehen sein. Alternativ kann beispielsweise die Verbindungsebene 14 das Zellverbinders 10 zwischen zwei Batteriezellen 20 getrennt werden, sodass die getrennte Verbindungsebene 16 eine Lasche 12 bildet.

Der Querschnitt der stoffschlüssigen Verbindung 30 ist nach dem ersten Schritt S1 weiterhin kreisförmig.

Die dritte Ansicht zeigt den Zellverbinder 10 und die Batterie 20 nach einem zweiten Schritt S2. In dem zweiten Schritt S2 wird eine Zugkraft F auf die Lasche 12 aufgebracht. Die Zugkraft F resultiert in einer Schälbelastung in einem Randbereich 32 der stoffschlüssigen Verbindung 30.

Durch die hohe Schälbelastung im Randbereich 32 entsteht ein Riss 34 zwischen dem Zellverbinder 10 und der Batteriezelle 20, welche sich in Richtung Mitte der stoffschlüssigen Verbindung 30 ausbreitet.

Die vierte Ansicht zeigt den Zellverbinder 10 und die Batterie 20 nach einem dritten Schritt S3. In dem dritten Schritt S 3 wird eine Torsionskraft T auf den Zellverbinder 10 aufgebracht, welche in einer Torsionsbelastung der stoffschlüssigen Verbindung 30 resultiert. Die Torsionskraft T wirkt parallel zur stoffschlüssigen Verbindung 30. Der Riss 34 erhöht den Kerbfaktor der Torsionsbelastung. Dies führt dazu, dass sich der Riss 34 entlang der stoffschlüssigen Verbindung 30 ausbreitet, bis die stoffschlüssige Verbindung 30 getrennt ist.

Somit kann durch das Trennverfahren nach dem ersten Ausführungsbeispiel der Zellverbinder 10 rückstandsfrei von der Batteriezelle 20 entfernt werden. Des Weiteren bleibt der Kontaktbereich 22 der Batteriezelle 20 im Wesentlichen unbeschadet.

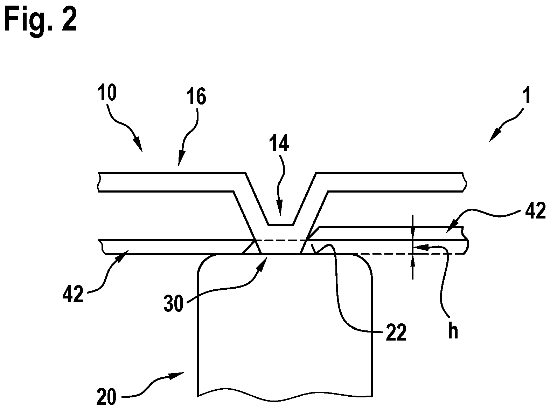

Figur 2 zeigt das Batteriepack 1 nach einem zweiten Ausführungsbeispiel. Das Batteriepack 1 umfasst den Zellverbinder 10, welche über die stoffschlüssige Verbindung 30 mit der Batteriezelle 20 verbunden ist. Des Weiteren umfasst das Trennverfahren zum Lösen der stoffschlüssigen Verbindung 30 eine erste Schneide 41 und eine zweite Schneide 42, welche eingerichtet sind den Zellverbinder 10 von der Batteriezelle 20 zu trennen.

Der Zellverbinder 10 des zweiten Ausführungsbeispiels ist vergleichbar zum Zellverbinder 10 des ersten Ausführungsbeispiels ausgeführt. Dabei weist der Zellverbinder 10 die Kontaktebene 14 auf, welche über die stoffschlüssige Verbindung 30 mit der Batteriezelle 20 verbunden ist. Des Weiteren weist der Zellverbinder 10 die Verbindungsebene 16 auf, welche parallel zur stoffschlüssige Verbindung 30 von der Batteriezelle 20 beabstandet angeordnet ist, sodass die stoffschlüssige Verbindung 30 und die Kontaktebene 14 gut von der ersten Schneide 41 und der zweiten schnalle 42 zugänglich sind.

Die erste Schneide 41 ist an dem Kontaktbereich 22 anliegend, parallel zu stoffschlüssigen Verbindung 30 angeordnet. Die zweite Schneide 42 ist in einer Höhe h zum Kontaktbereich 22 parallel zur ersten Schneide 41 angeordnet. Die Oberseite der ersten Schneide 41 und die Unterseite der zweiten Schneide 42 bilden einen Schneidspalt. Die Höhe h ist vorzugsweise gleich oder kleiner als 1 mm.

Zum Lösen der stoffschlüssigen Verbindung 30 zwischen dem Zellverbinder 10 und dem Kontaktbereich 22 der Batteriezelle 20 wir die erste Schneide 41 und die zweite Schneide 42 entgegengesetzt zueinander an der Kontaktebene 14 das Zellverbinder 10 angesetzt. Durch das Aufbringen einer Schneidkraft durch die erste Schneide 41 und die zweite Schneide 42 auf die Kontaktebene 14 verformt sich die Kontaktebene 14 zuerst plastisch. Aufgrund der durch die Schneidkraft resultierende Scherbelastung bildet sich ein Riss von der Schneidkante der ersten Schneider 41 und/oder der zweiten Schneide 42 aus. Die Scherbelastung führt anschließend zu einer Ausbreitung des Risses, welche in einer Durchtrennung der Kontaktebene 14 leicht oberhalb der stoffschlüssigen Verbindung 30 resultiert. Der Riss breitet sich insbesondere parallel zum Kontaktbereich 22 aus. Die Batteriezelle 20 erhält somit keinerlei Beschädigung, da der Kontaktbereich 20 nicht durch die Scherbelastung belastet wird.

Nachdem der Zellverbinder 10 von der Batteriezelle 20 im Bereich der Kontaktebene 14 getrennt ist, ist ein Teil der Kontaktebene 14 weiterhin durch die stoffschlüssige Verbindung 30 mit der Batteriezelle 20 verbunden. Dieser Teil der Kontaktebene 14 ist vorzugsweise so klein, dass ein erneutes stoffschlüssiges Verbinden des Zellverbinders 10 mit der Batteriezelle 20 ohne eine Nachbearbeitung der Batteriezelle 20 möglich ist.

Alternativ zum Scherschneiden ist die Durchtrennung der Kontaktebene 14 auch durch Keilschneiden möglich, wobei die erste Schneide 41 und die zweite Schneide 42 auf einer gemeinsamen Ebene parallel zum Kontaktbereich 22 angeordnet sind. Die Anordnung der ersten und zweiten Schneide 41, 42 auf einer Ebene ermöglicht ein Durchtrennen der Kontaktebene 14 noch näher an der stoffschlüssigen Verbindung 30, vorzugsweise direkt an der stoffschlüssigen Verbindung 30.

Weiter bevorzugt kann der das Trennverfahren nach dem zweiten Ausführungsbeispiel durch eine Torsionsbelastung und/oder Scherbelastung auf die stoffschlüssige Verbindung 30 unterstützt werden.

## Patentansprüche

1. Trennverfahren zum Lösen einer stoffschlüssigen Verbindung (30) zwischen einem Zellverbinder (10) und einem Kontaktbereich (22) einer Batteriezelle (20), so dass die Batteriezelle (20) ohne weiterer Nacharbeitungsschritte erneut stoffschlüssig verbindbar ist, wobei auf die stoffschlüssige Verbindung (30) eine Scherbelastung und/oder eine Schälbelastung und/oder eine Torsionsbelastung wirkt.

2. Trennverfahren nach Anspruch 1, wobei eine Lasche (12) des Zellverbinders (10) vom Kontaktbereich (22) aus weggebogen wird.

3. Trennverfahren nach Anspruch 2, wobei eine Zugkraft (F) auf die Lasche (12) ausgeübt wird, um eine Schälbelastung an einem Randbereich (32) der stoffschlüssigen Verbindung (30) zu erzeugen, sodass ein Riss (34) in der stoffschlüssigen Verbindung (30) entsteht.

4. Trennverfahren nach Anspruch 3, wobei die Zugkraft (F) im Wesentlichen senkrecht zum Kontaktbereich (22) ausgerichtet ist.

5. Trennverfahren nach einem der Ansprüche 3 oder 4, wobei nach der Rissentstehung eine Torsionsbelastung auf die stoffschlüssige Verbindung (30) aufgebracht wird, so dass sich der Riss (34) im Wesentlichen parallel zum Kontaktbereich (22) ausbreitet.

6. Trennverfahren nach einem der vorhergehenden Ansprüche, umfassend einen Scherschneideschritt, wobei eine erste Schneide (41) und eine zweite Schneide (42) zwischen dem Kontaktbereich (22) und dem Zellverbinder (10) beidseitig an der stoffschlüssigen Verbindung (30) angeordnet werden, wobei die erste Schneide (41) und die zweite Schneide (42) eine Scherbelastung im Bereich der stoffschlüssigen Verbindung (30) auf den Zellverbinder (10) ausüben, um den Zellverbinder (10) von der Batteriezelle (20) zu trennen.

7. Trennverfahren nach Anspruch 6, wobei die erste Schneide (41) und die zweite Schneide (42) den Zellverbinder (10) weniger als 1 mm oberhalb des Kontaktbereichs (22) von der Batteriezelle (20) trennen.

8. Batteriepack, umfassend eine Batteriezelle (20) und einen Zellverbinder (10), wobei die Batteriezelle (20) mit dem Zellverbinder (10) durch eine stoffschlüssige Verbindung (30) an einem Kontaktbereich (22) der Batteriezelle (20) verbunden ist, wobei die stoffschlüssige Verbindung (30) eingerichtet ist, durch ein Verfahren nach einem der Ansprüche 1 bis 7 getrennt zu werden.

9. Batteriepack nach Anspruch 8, wobei der Zellverbinder (10) eine Kontaktebene (14) aufweist, welche durch die stoffschlüssige Verbindung (30) mit der Batteriezelle (20) verbunden ist, und wobei der Zellverbinder (10) eine Verbindungsebene (16) aufweist, wobei die Verbindungsebene (16) von der Batteriezelle (20) beabstandet, parallel zur Kontaktebene (14) angeordnet ist.

10. Batteriepack nach Anspruch 8 oder 9, wobei der Zellverbinder (10) eine Lasche (12) aufweist, die angrenzend an die stoffschlüssige Verbindung (30) angeordnet ist.
